# EUROPEAN PATENT APPLICATION

(11) **EP 1 862 076 A1**
(43) Date of publication of application: **05.12.2007**
(21) Application number: 07109382.7
(22) Date of filing: 01.06.2007
(51) Int. Cl.: A23C 19/032, A23C 19/14, A23C 21/02

(54) **Method for preparing cheese using a mesophilic adjunct starter; cheese and whey obtainable by this method**

(30) Priority: 02.06.2006 NL 1031950
(71) Applicant: Friesland Brands B.V., 7943 PE Meppel (NL)
(72) Inventor: Verhoeven, Vincent Wilhelmus Andreas, 9728 VK, Groningen (NL); Knier, Cornelis Wyberen, 8808 HP, Dongjum (NL); van Arem, Everhardus Jacobus Franciscus, 8802 CR, Franeker (NL)
(74) Representative: van Loon, C.J.J.

(57) **Abstract**

The present invention relates to methods for the preparation of cheese, particularly to the preparation of semi-hard and hard cheeses, comprising the use of an adjunct starter consisting of a culture of mesophilic lactic acid bacteria. The invention further relates to cheeses thus prepared and to whey obtained as a by-product in the preparation of said cheeses. Finally, the present invention relates to the use of mesophilic cultures as an adjunct starter for providing cheese with the desired sensory properties.

## Description

The present invention relates to methods for the preparation of cheese, in particular for the preparation of semi-hard and hard cheeses. In particular, the invention relates to methods for the preparation of cheese manufactured with microbial rennet and preferably cheese of the Gouda type. The invention further relates to thus prepared or obtainable cheeses and to whey obtained and obtainable as a by-product in the preparation of above-mentioned cheeses. Finally, the present invention relates to the use of mesophilic structures as an adjunct starter for providing cheese with the desired sensory properties.

Cheese preparation comprises separating the solid milk components such as proteins, fats and minerals from the milk liquid. Under the influence of rennet and starter, the milk proteins coagulate and in particular the caseins, with fat and liquid being included, a process known as curdling. Here, a curd is formed. After cutting the curd into curd parts and expressing the whey liquid, the cheese is formed, which can optionally be pickled and ripened.

In order to make cheese curdle, different methods can be used. Coagulation of the milk protein casein takes place at a pH of 4.6 so that addition of acid or acidification of the cheese by a starter automatically results in coagulation. Examples of acid-coagulated products are cottage cheese, soft curd cheese, and cream cheese. A combination of acid and heating may also be used. An advantage thereof is that the whey proteins coagulate as well. The originally Indian Paneer and Ricotta are examples of such acid-heat coagulated types of cheese. With semi-hard and hard cheeses, typically an enzymatic curdling is carried out by use of a special rennet. Rennet is naturally found in the abomasum of young calves. The active ingredient in abomasal rennet is the enzyme chymosin. In addition to this animal rennet, vegetable and microbial rennet is also used which is manufactured on the basis of plant extracts and obtained from microorganisms, respectively.

Chymosin can be obtained from microorganisms after a genetic modification. Here, the respective gene is transferred from calf stomachs into microorganisms. Pure microbiological chymosin provides the same activity as abomasal rennet.

The enzymes from vegetable and microbial rennet act less specifically. These enzymes provide, in addition to the desired cleavage (such as by chymosin), other cleavages in the milk protein as well. These protein cleavages result in peptides, some of which can provide the cheese with the flaw "bitter" when accumulated sufficiently. Further decomposition of bitter peptides by suitable thermophilic or mesophilic adjuncts can prevent that accumulation and accordingly the flaw.

The advantage of the use of vegetable or microbial rennet in the preparation of cheese is that both end products, so both cheese and whey, can obtain the designations "vegetarian" and "halal". This means that a broader market is generated, which increases the cost effectiveness of the cheese production.

As said, it is an important problem that, however, with the use of vegetable and microbial rennet, after prolonged periods of ripening, a bitter taste may arise.

Starter, which consists of lactic acid bacteria, is *inter alia* important for the conversion of lactose into lactic acid, for the promotion of curdling, and for the improvement of the taste and shelf life of the cheese. Different species of lactic acid bacteria are used, depending on the desired type of cheese.

The present inventors have now found that, by use of a specifically selected adjunct starter, consisting of a culture of mesophilic bacteria, in any case the problem of the bitterness can be prevented.

The use of thermophilic lactic acid bacteria as an adjunct culture in the preparation of cheese is known. For instance, EP-A-1 559 326 describes the use of a thermophilic adjunct culture to promote the ripening of Gouda cheese, which is conventionally prepared with a mesophilic starter culture. This is possible because thermophilic bacteria generally show a higher proteolytic activity than mesophilic bacteria. So, it is unexpected that an adjunct culture based on mesophilic lactic acid bacteria can also have this effect, all the more since the starter culture mostly already consists of mesophilic lactic acid bacteria.

Further, the inventors have found that, by the use of the specific adjunct starter, consisting of a culture of mesophilic bacteria, the well-known white dots resembling mold in prolongedly ripened cheese, and which dots arise as a result of too strong peptidase activity and the subsequent crystallization of amino acids, are not formed. These crystals chiefly consist of the amino acid tyrosine.

Another additional advantage of the use of the specific adjunct starter, consisting of a culture of mesophilic bacteria, is that thereby no dominant and typically sweet taste is formed in the cheese. Although a sweet taste is desirable in certain cheeses, for instance in Emmental cheese, that is not the case in, for instance, "Gouda" cheese. This typically sweet taste is also referred to as "thermophilic flavor".

In a first aspect, the present invention provides a method for preparing cheese comprising the use of a vegetable or microbial rennet and an adjunct starter consisting of a culture of mesophilic lactic acid bacteria.

EP1287744 discloses the use of abomasal rennet for the preparation of a semi-hard or hard cheese in combination with an adjunct starter.

The method described in EP1245157 for making Proosdij-type cheese also relates to the use of rennet of animal origin. Just like EP1287744, EP1245157 teaches nothing about vegetable or microbial rennet.

EP1559326 discloses the use of microbial rennet and an adjunct starter with thermophilic bacteria.

However, none of above-mentioned documents discloses or suggests the use of a microbial or vegetable rennet in combination with an adjunct starter consisting of a culture of mesophilic lactic acid bacteria, and the advantages yielded by this combination with regard to the properties of the thus obtained cheese.

Herein, a starter culture or starter is defined as a culture of lactic acid bacteria which is added to milk or a milk product with the aim of lowering the pH thereof by fermentation and contributing to the ripening by release of proteolytic and lipolytic enzymes.

Herein, an adjunct starter or an adjunct culture is defined as a culture of lactic acid bacteria which is used in addition to a starter culture (i.e. as a co-culture) to improve the sensory quality of the end product, such as the taste, smell, color or other appearance.

The main task of a starter culture or acidifying culture is the acidification of the curd to a pH suitable for the required shelf life. An adjunct culture is intentionally deployed for a different purpose such as for instance taste or consistency. Generally and preferably, the adjunct culture does not contribute to the acidification process. If the adjunct culture did make a relevant contribution to the acidification process, then that would make the control of the cheese preparation process and in particular the control of the moisture content more difficult. The advantage of a thermophilic adjunct is that it is not very active at the temperatures of the Gouda cheese preparation process suboptimal for that culture and therefore contributes little to the acidification. With use of mesophilic adjuncts, for which the optimal temperature does correspond with that of the cheese preparation process, they therefore also need to be selected for a not very active or fast acidification.

Herein, lactic acid bacteria are defined as Gram positive, non-spore-forming, anaerobic, catalase negative cocci or rods forming lactic acid as only or main end product of their carbohydrate metabolism. Well-known genera are *Bifidobacterium, Carnobacterium, Enterococcus, Lactobacillus, Lactococcus, Lactospaera, Leuconostoc, Oenococcus, Pediococcus, Streptococcus, Vagococcus* and *Weissella.* For the cheese preparation, the genera *Bifidobacterium, Lactobacillus, Lactococcus, Leuconostoc, Pediococcus,* and *Streptococcus* are of great importance. During their growth, lactic acid bacteria form metabolites. These metabolites contribute to the desired sensory properties of the product. Some formed metabolites are, for instance, acetic acid, diacetyl, acetaldehyde, ethanol and exopolysaccharides.

Lactic acid bacteria which are used as starter cultures are divided into mesophilic (optimum growth at about 30°C) and thermophilic strains (optimum growth around 40-45°C). Thermophilic strains are used for the preparation of yoghurt and certain types of cheese, such as Emmental cheese and Parmesan cheese. Mesophilic strains are fairly generally used in the cheese preparation, for instance in the preparation of Cheddar, Gouda and Edam cheese, feta and Camembert.

Mesophilic lactic acid bacteria are used at temperatures between about 18°C and about 37°C. Suitable mesophilic bacteria are, for instance, *Lactococcus lactis* spp. *lactis, Lactococcus lactis* spp. *cremoris, Lactococcus lactis* spp. *lactis* biovar *diacetylactis, Leuconostoc mesenteroides* and *Pediococcus pentosaceus.*

Thermophilic lactic acid bacteria are used at temperatures between about 30°C and about 45°C, more in particular 37°C to 45°C and for many Lactobacilli most optimally 42°C. The most important thermophilic cultures used in the cheese preparation comprise strains of the species *Streptococcus thermophilus, Enterococcus faecium, Lactobacillus delbrueckii* spp. *bulgaricus, Lactobacillus delbrueckii* spp. *lactis, Lactobacillus helveticus,* and *Propionibacterium* spp. *Lactobacillus acidophilus, Lactobacillus casei,* and *Bifidobacterium* spp. are mainly used for the preparation of yoghurt.

Preferably, this cheese is a hard or semi-hard cheese, such as for instance a Pecorino, Parmigiano, Reggiano, Gouda, Edam, Gruyere, Emmental, Comté. Preferably, the preparation of Gouda cheese is involved.

In principle, in a method according to the invention, any type of rennet can be used. Preferably, the method comprises the use of vegetable or microbial rennet. In particular, the invention relates to the use of a microbial rennet because, here, typically, an undesired degree of bitterness is created in the end product. This is particularly undesired when it comes to the preparation of cheese with a non-bitter taste recognizable from old, such as for instance Gouda cheese. In particular, the present invention therefore relates to the preparation of Gouda cheeses by the use of microbial rennet. It should be noted, however, that the invention is not limited thereto.

A method according to the invention preferably comprises the steps in which a microbial rennet and a suitable starter culture are added to milk as a starter for curdling that milk and for providing a curd. Then, optionally while cutting, the whey is separated from the curd and the curd is pressed in a desired mold. After this, the still soft young cheese can be pickled and be ripened for a desired time. The starter culture used as a starter will, in most cases, consist of a culture of mesophilic lactic acid bacteria. However, it should be noted that, in principle, starter cultures of thermophilic lactic acid bacteria may be used as well. However, starter cultures of mesophilic lactic acid bacteria are preferred in methods according to the invention for the simple reason that they are typically used in the preparation of Gouda cheese. The mesophilic cultures have a temperature optimal for their development, which corresponds to the preparation temperatures conventional for Gouda cheese. In this respect, the characteristic BOS starter (CSK, Leeuwarden, The Netherlands) or variants thereof should be considered a particularly suitable starter culture for use in methods according to the present invention.

The mesophilic lactic acid bacteria in the adjunct starter used in methods according to the invention can be chosen very suitably from the group consisting of *Lactococcus lactis* spp. *lactis, Lactococcus lactis* spp. *cremoris, Lactococcus lactis* spp. *lactis* biovar *diacetylactis, Leuconostoc mesenteroides,* and *Pediococcus pentosaceus,* and combinations thereof. Preferably, the mesophilic lactic acid bacteria in the adjunct starter are chosen from the group consisting of *Lactococcus lactis* spp. *lactis, Lactococcus lactis* spp. *cremoris, Lactococcus lactis* spp. *lactis* biovar *diacetylactis,* and *Leuconostoc mesenteroides* and combinations thereof.

Many of the above-described mesophilic lactic acid bacteria are obtainable as commercial cultures, *inter alia* from CSK, Leeuwarden, The Netherlands, or from Chr. Hansen, Horsholm, Denmark. The advantage of the use of such commercial cultures is that they are of a constant quality. Very suitable adjunct starters are, for instance, the cultures B33 (CSK, Leeuwarden) and CR322, CR213, CR319, CR312, all obtainable from Chr. Hansen. These cultures may, of course, also be used in combination. Most preferred are the cultures B33, CR213, CR319 and CR312. The best results were obtained with CR319 and CR312.

It was found that the use of the cultures of mesophilic lactic acid bacteria as adjunct cultures in addition to the normal starter culture has a strong debittering effect on Gouda cheese prepared by the use of microbial rennet. Therefore, in another aspect, the present invention relates to a method for preparing Gouda cheese with a reduced bitterness comprising the steps of adding to milk a microbial rennet and a starter of mesophilic lactic acid bacteria (in particular BOS or variants thereof) as a starter culture, making the milk curdle for providing a curd, the separation of whey, pressing the curd in a desired mold, pickling the pressed cheese and letting the cheese ripen for a desired time, characterized in that, in addition to above-mentioned acidifying starter, an adjunct starter consisting of a culture of mesophilic lactic acid bacteria is used. The mesophilic lactic acid bacteria which are preferably used are as described hereinabove. Any commercial cultures to be used are also as described hereinabove.

Another aspect of the present invention relates to the cheese obtainable by use of a method according to the present invention. This cheese is characterized by a reduced bitterness compared to a similar cheese prepared without use of the adjunct starter of mesophilic lactic acid bacteria. Here, it is noted that - when the adjunct starter of the mesophilic lactic acid bacteria is not used - the flaw "bitter" manifests itself more strongly with progressive ripening. In particular after about 12, and more clearly after about 16 weeks and older, this flaw often becomes manifest. Another characteristic of the cheese according to the invention is that the cheese flavor obtained is not or hardly different from that without the adjunct culture. This is because the adjunct is closely related and coming from the same group of mesophilic lactic acid bacteria as the conventional acidifying culture. In contrast with a thermophilic adjunct, the typical sweet "thermophilic flavor" does not arise in the course of time. A great advantage of the cheeses prepared according to certain preferred methods of the invention is that they can obtain the designation "vegetarian" or "halal" because no animal products other than milk are incorporated therein.

Another aspect of the present invention relates to the whey obtainable by use of a method according to the present invention. For this, it also holds that it can have the designation "vegetarian" or "halal" due to the absence of the animal abosamal rennet.

Finally, the present invention relates to the use of a culture of mesophilic lactic acid bacteria as an adjunct starter in the preparation of Gouda cheese where a microbial rennet is used for reduction of the bitterness, reduction of the sweetness or for prevention of the formation of visible amino acid crystals on sections of the cheese.

The following example serves to illustrate the above-described invention. Percentages are weight percentages based on the weight of the total composition unless indicated otherwise.

### Example 1

Gouda cheese was prepared in 500 liters of curd preparer according to typically Gouda recipe (see for instance Fox PF (ed) Cheese: Chemistry, Physics and Microbiology. Third edition (2004), reprinted (2005), Vol. 2, Gouda and Related Cheeses, pp. 101-140).

The composition of the cheese milk was as follows:

| | |
|---|---|
| Fat content | 3.53% |
| Protein content | 3.40% |
| Lactose content | 4.43% |
| pH | 6.5 |

To the cheese milk, calcium chloride was added in an amount of 80 grams of a 40%-ish solution in water per 100 liters of cheese milk. As a microbial rennet, Fromase XL (DSM Food specialties, Delft) was used in a quantity of 15 grams per 100 liters of cheese milk. The adjunct cultures were added as deep-frozen pellets.

The curdling temperature was 31°C, and an after-heating temperature of 36°C was used. The processing time was 70 minutes. The first whey separation comprised 250 kg including 75 liters of curd wash water. The procedure provided 8 kg of natural cheeses. After 16 weeks, bitter and sweet were determined. The scores for bitter and sweet were determined with the aid of a trained sensory panel (QDA method) where 12 subjects were offered the cheeses in two sessions in a randomized manner and gave a score on a scale from 1 to 10. The presence of crystals (crystallization of amino acids) was visually determined. The results are given in the table below.

| | **1** | **2** | **3** | **4** | **5** | **6** |
|---|---|---|---|---|---|---|
| Starter | Bos | Bos | Bos | Bos | Bos variant | Bos variant |
| % starter | 0.6 | 0.6 | 0.6 | 0.6 | 0.5 | 0.5 |
| Adjunct starter | - | CR213 | CR319 | CR312 | - | B33 |
| % adjunct starter | - | 0.004 | 0.004 | 0.004 | - | 0.04 |
| bitter score | 3 | 1.8 | 1.2 | 0.8 | 3.7 | 1.3 |
| sweet score | 1 | 1 | 1 | 1 | 1 | 1 |
| presence of crystals | no | no | no | no | no | no |

## Claims

1. A method for preparing cheese comprising the use of vegetable or microbial rennet and the use of an adjunct starter consisting of a culture of mesophilic lactic acid bacteria.

2. A method according to claim 1, wherein said cheese is a hard or semi-hard cheese.

3. A method according to claim 2, wherein the cheese is of the Gouda type.

4. A method according to any one of the preceding claims, wherein the mesophilic lactic acid bacteria in said adjunct starter are chosen from the group consisting of *Lactococcus lactis* spp. *lactis, Lactococcus lactis* spp. *cremoris, Lactococcus lactis* spp. *lactis* biovar *diacetylactis, Leuconostoc mesenteroides,* and *Pediococcus pentosaceus,* and combinations thereof, preferably from the group consisting of *Lactococcus lactis* spp. *lactis, Lactococcus lactis* spp. *cremoris, Lactococcus lactis* spp. *lactis* biovar *diacetylactis,* and *Leuconostoc mesenteroides* and combinations thereof.

5. A method according to any one of the preceding claims, wherein said adjunct starter is chosen from the cultures B33, CR322, CR213, CR319, CR312, and combinations thereof, preferably from the cultures B33, CR213, CR319, CR312, and combinations thereof.

6. A method for preparing Gouda cheese with a reduced bitterness comprising the steps of adding to milk a microbial rennet and a starter of mesophilic lactic acid bacteria as a starter culture, making the milk curdle for providing a curd, the separation of whey, pressing the curd in a desired mold, pickling the pressed cheese and letting the cheese ripen for a desired time, **characterized in that**, in addition to said starter, an adjunct starter consisting of a culture of mesophilic lactic acid bacteria is used.

7. A method according to claim 6, wherein the mesophilic lactic acid bacteria in said adjunct starter are chosen from the group consisting of *Lactococcus lactis* spp. *lactis, Lactococcus lactis* spp. *cremoris, Lactococcus lactis* spp. *lactis* biovar *diacetylactis, Leuconostoc mesenteroides,* and *Pediococcus pentosaceus,* and combinations thereof, preferably from the group consisting of *Lactococcus lactis* spp. *lactis, Lactococcus lactis* spp. *cremoris, Lactococcus lactis* spp. *lactis* biovar *diacetylactis,* and *Leuconostoc mesenteroides* and combinations thereof.

8. A method according to claim 6 or 7, wherein said adjunct starter is chosen from the cultures B33, CR322, CR213, CR319, CR312, and combinations thereof, preferably from the cultures B33, CR213, CR319, CR312, and combinations thereof.

9. A cheese obtainable by use of a method according to any one of claims 1-8.

10. A whey obtainable by use of a method according to any one of claims 1-8.

11. Use of a culture of mesophilic lactic acid bacteria as an adjunct starter in the preparation of Gouda cheese, wherein a microbial rennet is used for reduction of the bitterness, reduction of the sweetness and/or prevention of the formation of visible amino acid crystals on sections of the cheese.
